# EUROPÄISCHE PATENTSCHRIFT

(11) **EP 2 513 232 B1**
(45) Veröffentlichungstag und Bekanntmachung des Hinweises auf die Patenterteilung: **10.12.2014**
(21) Anmeldenummer: 10801552.0
(22) Anmeldetag: 13.12.2010
(51) Int. Cl.: C09D 11/00, C09D 7/12

(54) **METALLISCH LEITFÄHIGE TINTE FÜR TINTENSTRAHLDRUCK SOWIE VERFAHREN ZUR HERSTELLUNG DERSELBEN**
METALLIC CONDUCTIVE INK FOR INK JETTING AND PROCESS FOR PROVIDING THE SAID INK
MÉTALLIQUE ENCRE CONDUCTRICE POUR L'IMPRESSION JET D'ENCRE ET LEUR PROCÉDÉ DE FABRICATION

(30) Priorität: 16.12.2009 AT 19952009
(43) Veröffentlichungstag der Anmeldung: 24.10.2012
(73) Patentinhaber: Joanneum Research Forschungsgesellschaft mbH, 8010 Graz (AT)
(72) Erfinder: KÖSTLER, Stefan, A-8010 Graz (AT); WACHTER, Daniela, A-8020 Graz (AT); PICHLER, Heinz, A-8044 Graz (AT); RUDORFER, Andreas, A-8045 Graz (AT)
(74) Vertreter: Cunow, Gerda
(86) Internationale Anmeldenummer: PCT/AT2010/000477
(87) Internationale Veröffentlichungsnummer: WO 2011/079329

(56) Entgegenhaltungen:
- US-A1- 2007 056 402
- US-A1- 2008 008 822

## Beschreibung

Die vorliegende Erfindung bezieht sich auf eine metallische leitfähige Tinte für Tintenstrahldruck, umfassend ein Metallvorläufermaterial, insbesondere eine metallorganische Zersetzungsverbindung, und ein in einem organischen Lösungsmittel gelöstes, thermisch zersetzbares Polymer. Weiterhin bezieht sich die Erfindung auf ein.Verfahren zur Herstellung einer metallisch leitfähigen Tinte für Tintenstrahldruck umfassend das Auflösen eines Metallvorläufermaterials und Zusetzen eines in einem organischen Lösungsmittel gelösten, thermisch zersetzbaren Polymers.

Metallisch leitfähige Tinten zum Drucken von elektrisch leitfähigen Mustern sind seit längerer Zeit bekannt und basieren üblicherweise auf einer konzentrierten Dispersion von metallischen Teilchen in einem wäßrigen oder organischen Lösungsmittel bzw. Träger, welchem weitere Zusatzstoffe zum Stabilisieren und Einstellen der Oberflächenspannung und der rheologischen Eigenschaften zugesetzt sind. Um für einen Tintenstrahldruck geeignet zu sein, müssen derartige metallisch leitfähige Tintenteilchen eine Größe von einigen Nanometern bis etwa 100 nm aufweisen, wobei jedoch Tintenstrahltinten, welche auf hoch konzentrierten, metallischen Nanopartikeldispersionen beruhen, dahingehend nachteilig sind, daß eine effektive Stabilisierung der hoch konzentrierten Nanopartikeldispersionen durch oberflächenaktive Substanzen und Polymere sehr schwierig ist. Darüber hinaus ist es nahezu unmöglich, ein Agglomerieren der metallischen Teilchen über einen verlängerten Zeitraum zu vermeiden, so daß derartige Tinten dazu neigen, Düsen und Druckköpfe zu verklumpen bzw. zu verlegen, wodurch die Lebensdauer von sowohl der Tinte als auch den damit betriebenen Einrichtungen deutlich herabgesetzt ist.

Zur Vermeidung von derartigen Problemen von auf metallischen Nanopartikeln basierenden Tintenformulierungen wurde in der WO 2006/093398 eine Tintenformulierung vorgeschlagen, welche auf Metallkomplexen oder Metallsalzen basiert. Aufgrund des niedrigen Molekulargewichts der eingesetzten löslichen Metallkomplexe haben diese Tinten insbesondere in Druckanwendungen Nachteile, da ihre Viskosität zu niedrig ist, um in einer üblichen Tintenstrahldrucktechnik einsetzbar zu sein. Um dieses Problem zu lösen, wurde vorgeschlagen, zu derartigen Tintenformulierungen Polymere als Viskositätsmodifikationsmittel zuzusetzen, welche Polymere während eines anschließend an das Drucken stattfindenden Trocknungs- bzw. Härtungsschritts zersetzt werden. Eine derartige Tinte ist beispielsweise in der US-A 2007/0154644 beschrieben.

Weiterhin sind die Filmbildungseigenschaften und Musterbildungseigenschaften von Lösungen, enthaltend metallische Verbindungen mit niedrigem Molekulargewicht und von Metallsalzen schlecht und es ist der Zusatz eines Bindemittels, insbesondere eines Polymers mit hohem Molekulargewicht für die Filmbildung erforderlich, um Filme oder Muster auszubilden. Um die in derartigen Tinten eingesetzten Metallkomplexe nach dem Druckschritt zu reduzieren, ist ein Thermolyseverfahren des metallischen Vorläufers oder der Zusatz eines chemischen Reduktionsmittels, welches mit dem Metallvorläufer in Kontakt zu bringen ist, erforderlich. Dies wird beispielsweise gemäß der US-A 2006/0130700 durch ein zweites Druckverfahren, bei welchem das Reduktionsmittel abgeschieden wird, durchgeführt.

Die vorliegende Erfindung zielt nun darauf ab, eine metallisch leitfähige Tinte für Tintenstrahldruck zur Verfügung zu stellen, deren Zusammensetzung so gewählt ist, daß sie unmittelbar für das Drucken mittels Tintenstrahltechnologie auf verschiedenen Substratmaterialen geeignet ist und welche ohne Einsatz von Zusatzstoffen, wie Viskositätsmodifikationsmitteln, Katalysatoren, Reduktionsmitteln und dgl. zum Drucken geeignet ist, und unmittelbar nach dem Druck und einem Trocknen ein homogenes, metallisches Muster mit exzellenter Leitfähigkeit ausbildet.

Zur Lösung dieser Aufgabe ist die erfindungsgemäße Tinte dadurch gekennzeichnet, daß als thermisch zersetzbares Polymer ein Polymer mit einer Zersetzungstemperatur T_{c} < 150°C enthalten ist, daß das Polymer aus einem blockierte Endgruppen aufweisenden, cyclischen Polyacetal, einen cyclischen Polyaldehyd aus bifunktionellen Monomeren, wie Polyphthalaldehyd, Polyglutaraldehyd, Polysuccinaldehyd oder einer polymeren Glyoxylsäure oder einem Glyoxylsäurederivat, wie Poly(methylglyoxylat) gewählt ist, und daß monomere Depolymerisationsprodukte des thermisch zersetzbaren Polymers als Reduktionsmittel für das Metallvorläufermaterial eingesetzt sind. Indem in der metallisch leitfähigen Tinte für den Tintenstrahldruck gemäß der vorliegenden Erfindung als thermisch zersetzbares Polymer ein Polymer mit einer Zersetzung von kleiner 150 °C enthalten ist, wird sichergestellt, daß das thermisch zersetzbare Polymer sich nach dem Druck während eines Ausheizschritts bei maximal 150 °C zersetzt. So kann ein Sinterschritt bei hohen Temperaturen größer 200 °C vermieden werden, wie er sonst vor allem für Metalle mit hohen Schmelzpunkten wie Pt nötig ist. Indem weiterhin das Polymer aus einem blockierte Endgruppen aufweisenden, cyclischen Polyacetal, einem cyclischen Polyaldehyd aus bifunktionellen Monomeren, wie Polyphthalaldehyd, Polyglutaraldehyd, Polysuccinaldehyd und einer polymeren Glyoxylsäure oder einem Glyoxylsäurederivat, wie Poly(methylglyoxylat) gewählt ist, gelingt es die thermisch extrem empfindlichen, cyclischen Polyacetale, cyclischen Polyaldehyde aus bifunktionellen Monomeren in einer isolierbaren und/oder technisch verwertbaren Form zur Verfügung stellen, so daß sie unmittelbar ohne weitere Bearbeitung in der metallischen leitfähigen Tinte für den Tintenstrahldruck zum Einsatz gelangen können. Indem weiterhin die monomeren Depolymerisationsprodukte des thermisch zersetzbaren Polymers als Reduktionsmittel für das Metallvorläufermaterial einsetzbar sind, gelingt es, eine metallisch leitfähige Tinte zur Verfügung zu stellen, welche während ihres Einsatzes, d.h. während dem Druck und dem nachfolgenden Trocknungsschritt sich chemisch so verändert, daß sich einerseits das Polymer zersetzt und die gebildeten Zersetzungsbestandteile des Polymers andererseits das Metallvorläufermaterial unmittelbar reduzieren, so daß nach Beendigung des Druck- und Trocknungsvorgangs ein metallisch leitfähiges Muster, welches sowohl homogen als auch gut leitend ist, auf dem Untergrund zur Verfügung gestellt ist. Bevorzugt sind hiebei die thermisch zersetzbaren Polymere aus der Klasse der cyclischen Polyacetale und Poly(glyoxylsäurederivate), welche folgende allgemeine Formel aufweisen: 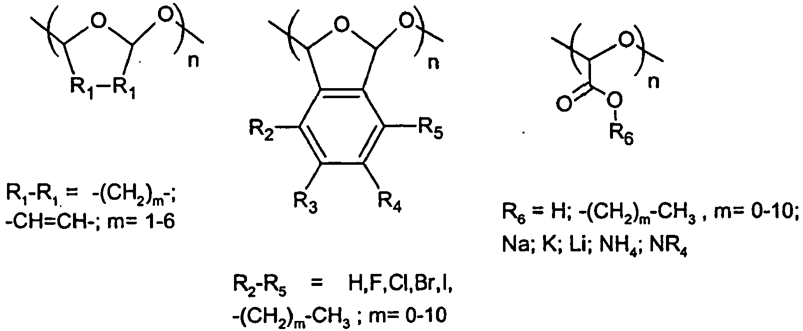 gewählt, welche allesamt besonders günstige Zersetzungseigenschaften aufweisen.

Indem das thermisch zersetzbare Polymer aus der Gruppe bestehend aus cyclischen Polyacetalen, cyclischen Polyaldehyden aus bifunktionellen Monomeren, wie Polyphthalaldehyd, Polyglutaraldehyd, Polysuccinaldehyd und polymeren Glyoxylsäurederivaten, wie Poly(methylglyoxylat) gewählt ist, gelingt es weiters, eine leitfähige Tinte zur Verfügung zu stellen, welche nicht agglomeriert bzw. verklumpt, rasch und zuverlässig gedruckt werden kann und überdies durch die rasche Zersetzung des gewählten Polymers, insbesondere bei niedrigen Temperaturen bei einem unmittelbar nach dem Drucken stattfindenden Trocknen einen extrem gut leitfähigen und homogenen Druck ausbildet.

Um eine vorzeitige Zersetzung des thermisch zersetzbaren Polymers mit Sicherheit hintanzuhalten, ist die metallisch leitfähige Tinte gemäß der vorliegenden Erfindung bevorzugt so weitergebildet, daß die Endgruppen des thermisch zersetzbaren Polymers durch stabile Gruppen, wie Ether, Ester, Amide oder Urethane blockiert sind. Indem die Endgruppen des thermisch zersetzbaren Polymers gemäß der vorliegenden Erfindung durch stabile Gruppen, wie Ether, Ester, Amide oder Urethane blockiert sind, können die labilen, thermisch zersetzbaren Polymere in technisch verwertbarer Form zur Verfügung gestellt werden, so daß sie in einer metallisch leitfähigen Tinte unmittelbar einsetzbar sind und überdies eine über lange Lagerzeiten bzw. Einsatzzeiten stabile Tinte ausgebildet werden kann, welche keinerlei Zersetzung oder Abscheidung von metallischen Partikeln zeigt.

Indem, wie dies einer bevorzugten Weiterbildung der vorliegenden Erfindung entspricht, das Metallvorläufermaterial der metallisch leitfähigen Tinte so gewählt ist, daß es ein Metallkomplex oder ein Metallsalz ist, dessen Metall-Zentralatom aus der Gruppe, enthaltend Ag, Au, Cu, Zn, Ni, Co, Pd, Pt, Ti, Zr, Cr, Ru, Os Ir, Sn, Pb, Al, Mo, W gewählt ist, und ein(en) oder mehrere Liganden bzw. Gegenion(en), gewählt aus der Gruppe enthaltend H, OH, Halogen, Ammonium, Alkylammonium, Amin, Amid, Carboxylat, Carbonat, Acetylacetonat, Cyanid, Cyanat, Isocyanat, Thiocyanat, Isothiocyanat, Phosphat, Phosphin, Alkoxid, Alkohol, Thiolat, Thiol, Nitrat, Nitrit, Azid, Terafluoroborat, Chlorat, Perchlorat und Carbonyl, aufweist, wie beispielsweise H₂PtCl₆, K₂PtCl₄, Pt(acac)₂, PtCl₂, PtCl₄, (NH₄)₂PdCl₄, (NH₄)₂PdCl₆, Pd(acac)₂, Pd(CₙH₂ₙ₊₁COO)₂ (n-1-20), HAuCl₄, (NH₄)AuCl₄, Au (CₙH₂ₙ₋₁COO)₂ (n-1-20), Ag(CH₃(CH₂)ₙCOO) worin n=4-25, AgNO₃, CuSO₄, RuCl₃, Ru(acac)₃, SnCl₂, ZnCl₂ oder Zn(NO₃)₂ -gelingt es insbesondere, einfache und leicht herstellbare Metallkomplexe oder Metallsalze als Metallvorläufermaterial in der Tinte einzusetzen, wodurch einerseits eine massive Kostenreduktion des Produkts gemäß der vorliegenden Erfindung erzielt werden kann und andererseits die metallisch leitfähige Tinte sicher und zuverlässig unmittelbar nach ihrem Drucken auf das gewünschte Untergrundmaterial und ihrer Trocknung eine gute Leitfähigkeit und Homogenität des Drucks aufweist.

Indem die metallisch leitfähige Tinte gemäß einer bevorzugten Weiterbildung der vorliegenden Erfindung so ausgebildet ist, daß zusätzlich ein Phasentransferreagens gewählt aus der Gruppe R-NH₂, wobei R entweder ein aromatischer Kohlenwasserstoff oder ein Alkyl mit 4 bis 20 Kohlenstoffatomen ist, R₄N⁺A⁻, wobei R Wasserstoff, Alkyl mit 1 bis 20 Kohlenstoffatomen oder aromatische Kohlenwasserstoffe bedeutet und A⁻ Halogen, OH oder OAc bedeutet, R-COO⁻Kat⁺, wobei R entweder ein aromatischer Kohlenwasserstoff oder ein Alkyl mit 4 bis 20 Kohlenstoffatomen ist und Kat⁺ H, NH₄, NR₄, K, Na oder Li bedeutet, R-SO₃⁻Kat⁺, wobei R entweder ein aromatischer Kohlenwasserstoff oder ein Alkyl mit 4 bis 20 Kohlenstoffatomen ist und Kat⁺ H, NH₄, NR₄, K, Na oder Li und R₃PO bedeutet, wobei R ein Alkyl mit 4 bis 20 Kohlenstoffatomen ist, enthalten ist, gelingt es insbesondere rasch und zuverlässig aus beispielsweise wäßrigen Lösungen anorganischer Metallkomplexe, ein komplexes Metallanion in die organische Phase zu extrahieren und somit eine metallisch leitfähige Tinte zur Verfügung zu stellen, welche neben den für ein Drucken erforderlichen rheologischen Eigenschaften, wie beispielsweise die Viskosität auch eine hohe Konzentration von Metallionen in der Tinte aufweist, um einen Druck mit ausreichender Leitfähigkeit zur Verfügung zu stellen. Darüber hinaus wird mit einer derartigen Tinte die für ein Drucken verwendete Druckerdüse nicht verlegt bzw. verunreinigt, wodurch sich insgesamt ein nicht unerheblicher ökonomischer Vorteil ergibt.

Um insbesondere ein gleichmäßiges und streifenfreies Drucken mit der Tinte gemäß der vorliegenden Erfindung zu ermöglichen, ist sie bevorzugt dahingehend weitergebildet, daß wenigstens ein Lösungsmittel gewählt aus Dimethylsulfoxid, γ-Butyrolacton, 1,2-Dimethoxybenzol, Tetrahydrofuran, Dioxan, Cyclopentanon, Alkylacetat, Alkylpropionat, Alkylbutyrat, Toluol, Xylol, Butanon,Anisol oder Dichlormethan enthalten ist.

Um insbesondere ein Verlaufen bzw. Ausrinnen der Tinte während des Drucks oder nach dem Druck mit Sicherheit hintanzuhalten, ist die erfindungsgemäße Tinte bevorzugt dahingehend weitergebildet, daß die Tinte eine Viskosität von 1,5 bis 35 mPas, insbesondere 2,5 bis 12 mPas aufweist. Bei einer derartigen Viskosität wird einerseits ein gleichmäßiger, nicht auslaufender Druck zur Verfügung gestellt, und andererseits ist die Viskosität der Tinte niedrig genug, um ein Verlegen der Düsen eines Druckers hintanzuhalten.

Für ein besonders gleichmäßiges Drucken und insbesondere eine ausreichende, elektrische Leitfähigkeit des gebildeten Drucks ist gemäß einer bevorzugten Weiterbildung die Tinte so ausgebildet, daß sie einen Metallanteil von > 5 Gew.-%, insbesondere > 8 Gew.-% aufweist. Mit einem derartig hohen Metallgehalt in der Tinte wird ein inhomogener, streifiger Druck mit Sicherheit hintangehalten. Es wird eine kontinuierliche und gleichmäßige, gut leitfähige, gedruckte Schicht zur Verfügung gestellt.

Für einen homogenen Druck, insbesondere für eine gleichmäßige Verteilung der Metallpartikel in der Tinte ist die metallisch leitfähige Tinte gemäß einer bevorzugten Weiterbildung so ausgebildet, daß sie grenzflächenaktive Substanzen, wie Tenside, Blockcopolymere, Netzmittel oder Emulgatoren enthält. Dadurch, daß grenzflächenaktive Substanzen, wie Tenside, Blockcopolymere, Netzmittel oder Emulgatoren in der metallisch leitfähigen Tinte enthalten sind, werden die Oberflächenspannung und die Benetzungseigenschaften an das Substratmaterial angepaßt, wodurch eine weitere Vergleichmäßigung des Drucks erzielt wird.

Für eine weitere Erhöhung der Metallgehalte und um insbesondere gegebenenfalls vorhandene Lücken in der Tintenformulierung mit metallischen Partikeln aufzufüllen ist, die Erfindung bevorzugt dahingehend weitergebildet, daß zusätzlich metallische Nanopartikel mit einer Größe von 3 bis 200 nm, insbesondere 5 bis 60 nm enthalten sind, wodurch weiterhin auch die Leitfähigkeit drastisch verbessert werden kann.

Eine besonders vollständige Auffüllung der in der Tintenformulierung vorhandenen Lücken und somit eine nahezu vollständig homogene Tinte ist bevorzugt so weitergebildet, daß 1 bis 20 Gew.-%, insbesondere 5 bis 10 Gew.-% des Metallanteils der Tinte von metallischen Nanopartikeln gebildet sind.

Die Erfindung zielt weiters auf ein vereinfachtes Verfahren zur Herstellung einer über eine lange Zeit stabilen, metallisch leitfähigen Tinte für den Tintenstrahldruck ab.

Zur Lösung dieser Aufgabe ist das erfindungsgemäße Verfahren dadurch gekennzeichnet, daß eine Lösung des Metallvorläufermaterials, insbesondere eines Metallkomplexes, mit einem in einem organischen Lösungsmittel gelösten, thermisch zersetzbaren Polymer, welches eine Zersetzungstemperatur T_{c} < 150°C aufweist, und welches aus einem blockierte Endgruppen aufweisenden, cyclischen Polyacetal, einem cyclischen Polyaldehyd aus bifunktionellen Monomeren, wie Polyphthalaldehyd, Polyglutaraldehyd, Polysuccinaldehyd und einer polymeren Glyoxylsäure oder einem Glyoxylsäurederivat, wie Poly(methylglyoxylat) gewählt ist, gewählt wird, versetzt wird, und daß das Metallvorläufermaterial durch monomere Depolymerisationsprodukte des thermisch zersetzbaren Polymers reduziert wird. Indem das Verfahren so geführt wird, daß eine Lösung des Metallvorläufermaterials mit einem in einem organischen Lösungsmittel gelösten, thermisch zersetzbaren Polymer versetzt wird, gelingt es, eine über lange Zeit stabile, elektrisch leitfähige Druckertinte herzustellen, welche keinerlei weitere Zusätze zur Stabilisierung, Viskositätseinstellung oder dgl. erfordert. Das Verfahren kann hiebei auch so geführt werden, daß die zwei Ausgangslösungen gesondert gelagert werden und unmittelbar vor Gebrauch miteinander umgesetzt werden, so daß ein vorzeitiger Abbau bzw. eine vorzeitige Reduktion des Metallkomplexes mit Sicherheit hintangehalten wird. Indem das Verfahren so geführt wird, gelingt es nicht nur, eine Tinte mit optimal eingestellter Viskosität zur Verfügung zu stellen, sondern es kann überdies der Zusatz von thermischen Katalysatoren, Reduktionsmitteln oder dgl. vermieden werden, was die Verfahrensführung insgesamt vereinfacht. Indem das Verfahren so geführt wird, daß sich das thermisch zersetzbare Polymer bei einer extrem niedrigen Zersetzungstemperatur (T_{c}), und zwar insbesondere bei einer Temperatur, welche unter der Temperatur des Härtungsschritts oder sogar unter Raumtemperatur liegt, in reduzierende Monomerbestandteile zersetzt, so daß es mit dem Verfahren gemäß der vorliegenden Erfindung möglich ist, einerseits unmittelbar das Metallvorläufermaterial in das neutrale Metall zu reduzieren, wodurch die Verwendung eines zusätzlichen Reduktionsmittels oder das Aussetzen des Drucks an eine reduzierende Gasatmosphäre vermieden werden kann und weiterhin die Härtung der gebildeten, gedruckten Muster bei Temperaturen < 200 °C durchgeführt werden kann.

Um insbesondere das Verfahren besonders schnell und zuverlässig zu führen, ist das Verfahren gemäß einer bevorzugten Weiterbildung so ausgebildet, daß eine wäßrige Lösung des mit einem in einem organischen Lösungsmittel gelösten Phasentransferreagens versetzt wird, gerührt wird und eine gebildete organische Phase nach ihrer Abtrennung von der wäßrigen Phase der Lösung des zersetzbaren Polymers zugesetzt wird. Bei einer derartigen Verfahrensführung gelingt es einerseits insbesondere günstige, in Wasser lösliche Metallvorläufermaterialen bzw. Metallkomplexe in dem erfindungsgemäßen Verfahren einzusetzen und andererseits wird durch Verwendung eines Phasentransferreagens ein ionischer Metallkomplex oder ein ionisches Metallsalz aus einer wäßrigen anorganischen Lösung in ein organisches Lösungsmittel extrahiert, indem ein Ionenpaar mit einem hydrophoben Gegenion gebildet wird, wodurch insbesondere hohe Metallkonzentrationen in der Lösung erzielbar sind.

Bei einer derartigen Verfahrensführung gelingt es weiters, das Metallvorläufermaterial in Lösung zu bringen und es kann in der Folge durch chemische Reduktion mittels der monomeren Depolymerisationsprodukte des thermisch zersetzbare Polymers in die neutrale, metallische Form überführt und auf die zu bedruckende Fläche aufgebracht werden. Die Reduktion kann hiebei entweder direkt während des Druckens oder unmittelbar nach einem Drucken auf das Substrat je nach Anwendungszweck und erforderlicher Temperatur vorgenommen werden.

Um unerwünschte Nebenprodukte in der das Metallvorläufermaterial enthaltenden organischen Lösung mit Sicherheit zu vermeiden, wird das erfindungsgemäße Verfahren bevorzugt so geführt, daß die das Metallvorläufermaterial enthaltende, gebildete organische Phase verdampft wird und ein das Metallvorläufermaterial enthaltender Rückstand in einem organischen Lösungsmittel aufgenommen wird. Mit einer derartigen Vorgangsweise gelingt es, die für das Drucken nicht erforderlichen Bestandteile des Metallvorläufermaterials sicher zuverlässig abzutrennen, so daß insgesamt eine Tinte hergestellt werden kann, welche einen sauberen, streifenfreien und unterbrechungsfreien Druck ermöglicht.

Besonders effizient und zuverlässig kann das Verfahren gemäß der vorliegenden Erfindung dadurch geführt werden, daß bevorzugt als Metallvorläufermaterial ein Metallkomplex oder ein Metallsalz eingesetzt wird, dessen Metall-Zentralatom aus der Gruppe enthaltend Ag, Au, Cu, Zn, Ni, Co, Pd, Pt, Ti, Zr, Cr, Ru, Os Ir, Sn, Pb, Al, Mo, W gewählt ist, und ein(en) oder mehrere Liganden bzw. Gegenion(en) gewählt aus der Gruppe enthaltend H, OH, Halogen, Ammonium, Alkylammonium, Amin, Amid, Carboxylat, Carbonat, Acetylacetonat, Cyanid, Cyanat, Isocyanat, Thiocyanat, Isothiocyanat, Phosphat, Phosphin, Alkoxid, Alkohol, Thiolat, Thiol, Nitrat, Nitrit, Azid, Terafluoroborat, Chlorat, Perchlorat und Carbonyl, aufweist, wie beispielsweise H₂PtCl₆, K₂PtCl₄, Pt(acac)₂, PtCl₂, PtCl₄, (NH₄)₂PdCl₄, (NH₄)₂PdCl₆, Pd(acac)₂, Pd(CₙH₂ₙ₊₁COO)₂ (n-1-20), HAuCl₄, (NH₄)AuCl₄, Au (CₙH₂ₙ₋₁COO)₂ (n-1-20), Ag(CH₃(CH₂)ₙCOO) worin n=4-25, AgNO₃, CuSO₄, RuCl₃, Ru(acac)₃, SnCl₂, ZnCl₂ oder Zn(NO₃)₂.

Indem ein Metallkomplex oder ein Metallsalz als Metallvorläufermaterial einsetzt wird, dessen Metallzentralatom und dessen Liganden bzw. Gegenionen entsprechend der Erfindung gewählt sind, gelingt es, eine Tintenformulierung herzustellen, welche mit einer üblichen piezoelektrischen Tintenstrahldruckeinrichtung gedruckt werden kann und welche fähig ist, gut definierte und elektrisch leitfähige, metallische Muster auszubilden.

Indem dies einer bevorzugten Weiterbildung der vorliegenden Erfindung entspricht, das Verfahren so geführt wird, daß das Phasentransferreagens aus der Gruppe R-NH₂, wobei R entweder ein aromatischer Kohlenwasserstoff oder ein Alkyl mit 4 bis 20 Kohlenstoffatomen ist, R₄N⁺A⁻, wobei R Wasserstoff, Alkyl mit 1 bis 20 Kohlenstoffatomen oder aromatische Kohlenwasserstoffe bedeutet und A⁻ Halogen, OH oder OAc bedeutet, R-COO⁻Kat⁺, wobei R entweder ein aromatischer Kohlenwasserstoff oder ein Alkyl mit 4 bis 20 Kohlenstoffatomen ist und Kat⁺ H, NH₄, NR₄, K, Na oder Li bedeutet, R-SO₃⁻Kat⁺, wobei R entweder ein aromatischer Kohlenwasserstoff oder ein Alkyl mit 4 bis 20 Kohlenstoffatomen ist und Kat⁺ H, NH₄, NR₄, K, Na oder Li und R₃PO bedeutet, wobei R ein Alkyl mit 4 bis 20 Kohlenstoffatomen ist, gewählt wird, kann eine weitere Beschleunigung des Verfahrens erzielt werden und gleichzeitig mit diesem Verfahren ein Produkt gebildet werden, welches einen sicheren und zuverlässigen Druck von gut definierten, metallisch leitfähigen Mustern ermöglicht.

Die Erfindung wird nachfolgend anhand von Ausführungsbeispielen näher erläutert.

### Beispiel 1

### Herstellung einer Goldtintenformulierung

390 mg HAuCl₄ werden in Wasser gelöst, um eine 0,1 molare Lösung zu ergeben. Zu dieser Lösung wird eine Lösung aus 1,1 g Tetraoctylammoniumbromid in 10 ml Dichlormethan hinzugefügt und die zwei Phasen werden unter heftigem Rühren vermischt. Durch den Einsatz des Phasentransferreagens, nämlich Tetraoctylammoniumbromid und das heftige Rühren resultieren die Bildung eines Ionenpaars zwischen dem Tetrachloroauratanion und den Tetraoctylammoniumkation und die Extraktion des Ionenpaars in die organische Phase gemäß der nachfolgenden Reaktionsgleichung

HAuCl₄ + N (R₄) Br → [AuCl₄]⁻ + N(R₄)⁺ + HBr

Die organische Phase wird abgetrennt, mit der wäßrigen Natriumcarbonatlösung zwei Mal gewaschen und das Lösungsmittel Dichlormethan durch Durchleiten eines Stickstoffstroms durch die Lösung verdampft. Der zurückbleibende Goldkomplex wird in 2 ml γ-Butyrolacton aufgelöst. Nachfolgend werden 2 ml einer 0,5 molaren Lösung von Poly(phthalaldehyd) mit einem Molekulargewicht von 40.000 bis 50.000 Dalton gelöst in γ-Butyrolacton zu der organischen Lösung des Goldkomplexes hinzugefügt, um eine druckfertige Goldtintenformulierung zu ergeben.

In dieser Tintenformulierung dient das thermisch depolymerisierbare Polymer sowohl als Viskositätsmodifikationsmittel, wobei die Viskosität der Tinte auf 7 mPas eingestellt wurde, als auch als Reduktionsmittel.

Die so zubereitete Druckertinte wurde in eine Druckerkartusche eines Diamatix DMP-Druckers zum Drucken von elektrisch leitfähigen Mustern eingefüllt.

Auf eine flexible Polymerfolie wurde durch Anwendung einer Piezospannung an dem Druckerkopf und Ausbringen von etwa 10 pl Tintentröpfchen ein Muster gedruckt. Nach Vervollständigung des Druckverfahrens wird das polymere Foliensubstrat mit dem darauf gedruckten Muster in einem Ofen bei 190 °C für 2,5 h getrocknet und nachfolgend in bezug auf die elektrische Leitfähigkeit, die Vollständigkeit der Umwandlung in den metallischen Zustand sowie die Gleichmäßigkeit des Drucks überprüft. 98 % der Metallionen wurden während des Trocknens durch die Zersetzung des depolymerisierbaren Polymers und durch Reduktion mittels der monomeren Depolymerisationsprodukte in den metallischen Zustand überführt. Das gedruckte Muster war vollständig gleichmäßig, zeigte keinerlei Streifen und keinerlei Unterbrechungen, wobei der spezifische Widerstand der gedruckten Struktur mit etwa 10⁻⁷ Ωm bestimmt wurde.

### Beispiel 2

### Herstellung einer Platintintenformulierung

410 mg Hexachlorplatinsäure (H₂PtCl₆) werden in Wasser gelöst, um eine 0,1 molare Lösung zu ergeben. Eine Lösung von 1,1 g Tetraoctylammoniumbromid, welches als Phasentransferreagens dient, in 10 ml Dichlormethan wird zu der wäßrigen Phase hinzugefügt und beide Phasen werden durch heftiges Rühren vermischt. Hiebei wird ein Ionenpaar zwischen dem Tetrachloroplatinatanion und dem Tetraoctylammoniumkation gebildet und das Ionenpaar wird in die organische Phase gemäß der nachfolgenden Reaktionsgleichung extrahiert.

H₂PtCl₆ + N(R₄)Br → [PtCl₆]²⁻ + 2 N(R₄)⁺ + 2 HBr

Die organische Phase wird abgetrennt, mit wäßriger Natriumcarbonatlösung zwei Mal gewaschen, das organische Lösungsmittel durch Durchleiten eines Stickstoffstroms durch die Lösung abgetrennt und der gebildete Platinkomplex in 2 ml γ-Butyrolacton gelöst. Nach Hinzufügen von 2 ml einer 0,5 molaren Lösung von Poly(phthalaldehyd) mit einem Molekulargewicht von etwa 45.000 Dalton wurde eine druckfertigte Tinte erhalten.

Mit dieser Tinte wurde ein zu Beispiel 1 analoger Druckversuch unternommen, wobei festgestellt werden konnte, daß der Druck vollständig gleichmäßig war, 99 % der Metallanionen in den metallischen Zustand überführt wurden und das gebildete Druckmuster einen spezifischen Widerstand von etwa 10⁻⁶ Ωm aufwies.

### Beispiel 3

### Herstellung einer Silbertintenformulierung

3 g Silbernitrat (AgNO₃) werden direkt, ohne die Notwendigkeit einer Extraktion aus einer wäßrigen Lösung und eines Phasentransferreagens unter Rühren in 5 ml einer 1 molaren Lösung von Poly(phthalaldehyd) mit einem Molekulargewicht von etwa 45.000 Dalton in DMSO zugegeben, womit eine druckfertige Tinte erhalten wird und eine Viskosität von etwa 6 mPas eingestellt wird.

Mit dieser Tinte wird ein zu Beispiel 1 analoger Druckversuch unternommen, wobei festgestellt werden konnte, daß der Druck gleichmäßig war, 98 % der Metallionen in den metallischen Zustand überführt wurden, und das gebildete Druckmuster einen spezifischen Widerstand von etwa 10⁻⁷ Ωm aufwies.

Alle hergestellten Drucktinten zeigten nach dem Härten eine exzellente Leitfähigkeit, einen niedrigen, spezifischen Widerstand und die metallischen Anionen waren jeweils zumindest 95 % in den metallischen (0-wertigen) Zustand überführt.

### Beispiel 4:

### Herstellung einer Platintintenformulierung

700 mg K₂PtCl₄ werden in Wasser gelöst um eine 0,1 molare Lösung zu erhalten. Zu dieser Lösung wird eine 0,2 M Lösung aus Tetraoktylammoniumbromid in 10 ml Ethylacetat zugegeben und die beiden Phasen unter heftigem Rühren vermischt. Dadurch wird das Tetrachloroplatinatanion gemäß der nachstehenden Reaktionsgleichung als Ionenpaar in die organische Phase extrahiert.

K₂PtCl₄ + 2 NR₄Br → [PtCl₄]²⁻ + 2 [NR₄] - + 2 KBr

Die organische Phase wird abgetrennt, mit wässriger Natriumcarbonatlösung zweimal gewaschen, das organische Lösungsmittel im Vakuum abgezogen und der zurückbleibende Platinkomplex in 2 ml γ-Butyrolacton gelöst. Nach hinzufügen einer Lösung von 160 mg Poly(ethylglyoxylat) (MW ca. 40.000 Da) in 2 ml γ-Butyrolacton erhält man eine druckfertige Tinte mit einer Viskosität von ca. 6 mPas.

Mit dieser Tinte wird ein zu Beispiel 1 analoger Druckversuch unternommen, wobei festgestellt werden konnte, daß der Druck gleichmäßig war, 98 % der Metallionen in den metallischen Zustand überführt wurden, und das gebildete Druckmuster einen spezifischen Widerstand von etwa 10⁻⁶ Ωm aufwies.

### Beispiel 5:

### Herstellung einer Goldtintenformulierung:

900 mg Gold(III)acetat, Au(CH₃COO)₃ werden direkt, ohne die Notwendigkeit einer Extraktion aus wäßriger Lösung, unter Rühren in 5 ml γ-Butyrolacton gelöst um eine ca. 0,5 molare Lösung zu erhalten. Zu dieser Lösung werden 370 mg Poly(ethylglyoxylat) mit einem Molekulargewicht von etwa 40.000 Da gelöst in 5 ml γ-Butyrolacton zugegeben, womit eine druckfertige Tinte mit einer Viskosität von etwa 6 mPas erhalten wird.

Mit dieser Tinte wird ein zu Beispiel 1 analoger Druckversuch unternommen, wobei festgestellt werden konnte, daß der Druck gleichmäßig war, 98 % der Metallionen in den metallischen Zustand überführt wurden, und das gebildete Druckmuster einen spezifischen Widerstand von etwa 10-7 Ωm aufwies.

### Beispiel 6:

### Herstellung einer Palladiumtintenformulierung:

500 mg Palladium(II)acetat, Pd(CH₃COO)₂ werden direkt, ohne die Notwendigkeit einer Extraktion aus wässriger Lösung, unter Rühren in 4 ml γ-Butyrolacton gelöst um eine 0,55 molare Lösung zu erhalten. Zu dieser Lösung werden 227 mg Poly(ethyl glyoxylat) mit einem Molekulargewicht von etwa 40.000 Da gelöst in 1 ml γ-Butyrolacton zugegeben, womit eine druckfertige Tinte mit einer Viskosität von etwa 7 mPas erhalten wird.

Mit dieser Tinte wird ein zu Beispiel 1 analoger Druckversuch unternommen, wobei festgestellt werden konnte, dass der Druck gleichmäßig war, 98 % der Metallionen in den metallischen Zustand überführt wurden.

**Tabelle mit weiteren Beispielen:**

| Nr. | Metallvorläufermaterial | Phasentransferreagens | Polymer | Lösungsmittel |
|---|---|---|---|---|
| 1 | HAuCl₄ | TOAB | PPA | GBL |
| 2 | HAuCl₄ | TOAB | PEG | GBL |
| 3 | HAuCl₄ | TOAB | PPA | DMSO |
| 4 | HAuCl₄ | TOAB | PEG | DMSO |
| 5 | HAuCl₄ | TOAB | PMG | GBL |
| 6 | HAuCl4 | TOAB | PEG | DMB |
| 7 | Au(CH₃COO)₃ | - | PPA | GBL |
| 8 | Au(CH₃COO)₃ | - | PEG | GBL |
| 9 | Au(CH₃COO)₃ | - | PMG | GBL |
| 10 | Au(CH₃COO)₃ | - | PEG | DMSO |
| 11 | Au(CH₃COO)₃ | - | PPA | DMSO |
| 12 | AgNO₃ | - | PPA | DMSO |
| 13 | AgNO₃ | - | PEG | DMSO |
| 14 | AgNO₃ | - | PMG | DMSO |
| 15 | Ag(C₈H₁₇COO) | - | PEG | GBL |
| 16 | K₂PdCl₄ | TOAB | PPA | GBL |
| 17 | K₂PdCl₄ | TOAB | PEG | GBL |
| 18 | K₂PdCl₄ | TOAB | PMG | GBL |
| 19 | Pd(CH₃COO)₂ | - | PPA | GBL |
| 20 | Pd(CH₃COO)₂ | - | PEG | GBL |
| 21 | Pd(CH₃COO)₂ | - | PMG | GBL |
| 22 | Pd(CH₃COO)₂ | - | PPA | DMSO |
| 23 | Pd(CH₃COO)₂ | - | PEG | Anisol |
| 24 | H₂PtCl₆ | TOAB | PPA | GBL |
| 25 | H₂PtCl₆ | TOAB | PEG | GBL |
| 26 | H₂PtCl₆ | TOAB | PMG | GBL |
| 27 | H₂PtCl₆ | TOAB | PPA | DMSO |
| 28 | H₂PtCl₆ | TOAB | PEG | DMSO |
| 29 | H₂PtCl₆ | TOAB | PMG | DMSO |
| 30 | K₂PtCl₄ | TOAB | PPA | GBL |
| 31 | K₂PtCl₄ | TOAB | PEG | GBL |
| 32 | K₂PtCl₄ | TOAB | PMG | GBL |
| 33 | K₂PtCl₄ | TOAB | PPA | DMSO |
| 34 | K₂PtCl₄ | TOAB | PEG | DMSO |
| 35 | K₂PtCl₄ | TOAB | PMG | DMSO |
| 36 | K₂PtCl₄ | TOAB | PEG | DMB |
| 37 | Pt(CH₃COO)₂ | - | PEG | Anisol |
| 38 | Pt(CH₃COO)₂ | - | PEG | GBL |
| 39 | Pt(CH₃COO)₂ | - | PMG | GBL |

| | | | | |
|---|---|---|---|---|
| TOAB ... Tetraoctylammoniumbromid PPA ... Poly(phthalaldehyd) PEG ... Poly (ethylglyoxylat) PMG ... Poly(methylglyoxylat) GBL ... γ-Butyrolacton DMSO ... Dimethylsulfoxid DMB ... 1,2-Dimethoxybenzol | | | | |

## Patentansprüche

1. Metallische leitfähige Tinte für Tintenstrahldruck, umfassend ein Metallvorläufermaterial, insbesondere eine metallorganischen Zersetzungsverbindung, und ein in einem organischen Lösungsmittel gelöstes, thermisch zersetzbares Polymer, **dadurch gekennzeichnet, daß** als thermisch zersetzbares Polymer ein Polymer mit einer Zersetzungstemperatur T_{c} < 150°C enthalten ist, daß das Polymer aus einem blockierte Endgruppen aufweisenden, cyclischen Polyacetal, einem cyclischen Polyaldehyd aus bifunktionellen Monomeren, wie Polyphthalaldehyd, Polyglutaraldehyd, Polysuccinaldehyd oder einer polymeren Glyoxylsäure oder einem Glyoxylsäurederivat, wie Poly(methylglyoxylat) gewählt ist und daß monomere Depolymerisationsprodukte des thermisch zersetzbaren Polymers als Reduktionsmittel für das Metallvorläufermaterial eingesetzt sind.

2. Metallische leitfähige Tinte nach Anspruch 1, **dadurch gekennzeichnet, daß** die Endgruppen durch stabile Gruppen, wie Ether, Ester, Amide oder Urethane blockiert sind.

3. Metallische leitfähige Tinte nach Anspruch 1 oder 2, **dadurch gekennzeichnet, daß** das Metallvorläufermaterial, ein Metallkomplex oder ein Metallsalz ist, dessen Metall-Zentralatom aus der Gruppe enthaltend Ag, Au, Cu, Zn, Ni, Co, Pd, Pt, Ti, Zr, Cr, Ru, Os Ir, Sn, Pb, Al, Mo, W gewählt ist, und ein(en) oder mehrere Liganden bzw. Gegenion(en), gewählt aus der Gruppe enthaltend H, OH, Halogen, Ammonium, Alkylammonium, Amin, Amid, Carboxylat, Carbonät, Acetylacetonat, Cyanid, Cyanat, Isocyanat, Thiocyanat, Isothiocyanat, Phosphat, Phosphin, Alkoxid, Alkohol, Thiolat, Thiol, Nitrat, Nitrit, Azid, Terafluoroborat, Chlorat, Perchlorat und Carbonyl, aufweist, wie beispielsweise H₂PtCl₆, K₂PtCl₄, Pt (acac)₂, PtCl₂, PtCl₄, (NH₄)₂PdCl₄, (NH₄)₂PdCl₆, Pd(acac)₂, Pd (CₙH₂ₙ₊₁COO)₂ (n=1-20), Pt (CₙH₂ₙ₊₁COO)₂ (n=1-20), Pt (CₙH₂ₙ₊₁COO)₄ (n=1-20), Au (CₙH₂ₙ₊₁COO)₃ (n=1-20), HAuCl₄, (NH₄)AuCl₄, Ag(CH₃(CH₂)ₙCOO) n=4-25, AgNO₃, CuSO₄, RuCl₃, Ru(acac)₃, SnCl₂, ZnCl₂ oder Zn(NO₃)₂.

4. Metallisch leitfähige Tinte nach einem der Ansprüche 1, 2 oder 3, **dadurch gekennzeichnet, daß** zusätzlich ein Phasentransferreagens gewählt aus der Gruppe R-NH₂, wobei R entweder ein aromatischer Kohlenwasserstoff oder ein Alkyl mit 4 bis 20 Kohlenstoffatomen ist, R₄N⁺A⁻, wobei R Wasserstoff, Alkyl mit 1 bis 20 Kohlenstoffatomen oder aromatische Kohlenwasserstoffe bedeutet und A⁻ Halogen, OH oder OAc bedeutet, R-COO⁻Kat⁺, wobei R entweder ein aromatischer Kohlenwasserstoff oder ein Alkyl mit 4 bis 20 Kohlenstoffatomen ist und Kat⁺ H, NH₄, NR₄, K, Na oder Li bedeutet, R-SO₃⁻Kat⁺, wobei R entweder ein aromatischer Kohlenwasserstoff oder ein Alkyl mit 4 bis 20 Kohlenstoffatomen ist und Kat⁺ H, NH₄, NR₄, K, Na oder Li und R₃PO bedeutet, wobei R ein Alkyl mit 4 bis 20 Kohlenstoffatomen ist, enthalten ist.

5. Metallisch leitfähige Tinte nach einem der Ansprüche 1 bis 4, **dadurch gekennzeichnet, daß** wenigstens ein Lösungsmittel gewählt aus Dimethylsulfoxid, γ-Butyrolacton, 1,2-Dimethoxybenzol, Tetrahydrofuran, Dioxan, Cyclopentanon, Alkylacetat, Alkylproionat, Alkylbutyrat, Toluol, Xylol, Butanon, Anisol oder Dichlormethan enthalten ist.

6. Metallisch leitfähige Tinte nach einem der Ansprüche 1 bis 5, **dadurch gekennzeichnet, daß** die Tinte eine Viskosität von 1,5 bis 35 mPas, insbesondere 2,5 bis 12 mPas aufweist.

7. Metallisch leitfähige Tinte nach einem der Ansprüche 1 bis 6, **dadurch gekennzeichnet, daß** die Tinte einen Metallanteil von größer 5 Gew.-%, insbesondere größer 8 Gew.-% aufweist.

8. Metallisch leitfähige Tinte nach einem der Ansprüche 1 bis 7, **dadurch gekennzeichnet, daß** sie grenzflächenaktive Substanzen, wie Tenside, Blockpolymere, Netzmittel oder Emulgatoren enthält.

9. Metallisch leitfähige Tinte nach einem der Ansprüche 1 bis 8, **dadurch gekennzeichnet, daß** zusätzlich metallische Nanopartikel mit einer Größe von 3 bis 200 nm, insbesondere 5 bis 60 nm enthalten sind.

10. Metallisch leitfähige Tinte nach einem der Ansprüche 1 bis 9, **dadurch gekennzeichnet, daß** 1 bis 20 Gew.-%, insbesondere 5 bis 10 Gew.-% des Metallanteils der Tinte von metallischen Nanopartikeln gebildet sind.

11. Verfahren zur Herstellung einer metallisch leitfähigen Tinte für Tintenstrahldruck umfassend das Auflösen eines Metallvorläufermaterials und Zusetzen eines in einem organischen Lösungsmittel gelösten, thermisch zersetzbaren Polymers, **dadurch gekennzeichnet, daß** eine Lösung des Metallvorläufermaterials, insbesondere eines Metallkomplexes, mit einem in einem organischen Lösungsmittel gelösten, thermisch zersetzbaren Polymer, welches eine Zersetzungstemperatur T_{c} < 150°C aufweist, und welches aus einem blockierte Endgruppen aufweisenden, cyclischen Polyacetal, einem cyclischen Polyaldehyd aus bifunktionellen Monomeren, wie Polyphthalaldehyd, Polyglutaraldehyd, Polysuccinaldehyd und einer polymeren Glyoxylsäure oder einem Glyoxylsäurederivat, wie Poly(methylglyoxylat) gewählt wird, versetzt wird und daß das Metallvorläufermaterial durch monomere Depolymerisationsprodukte des thermisch zersetzbaren Polymers reduziert wird.

12. Verfahren nach Anspruch 11, **dadurch gekennzeichnet, daß** eine wäßrige Lösung des Metallvorläufermaterials mit einem in einem organischen Lösungsmittel gelösten Phasentransferreagens versetzt wird, gerührt wird und eine gebildete organische Phase nach ihrer Abtrennung von der wäßrigen Phase der Lösung des zersetzbaren Polymers zugesetzt wird.

13. Verfahren nach Anspruch 11 oder 12, **dadurch gekennzeichnet, daß** die das Metallvorläufermaterial enthaltende, gebildete organische Phase verdampft wird und ein das Metallvorläufermaterial enthaltender Rückstand in einem organischen Lösungsmittel aufgenommen wird.

14. Verfahren nach Anspruch 11, 12 oder 13, **dadurch gekennzeichnet, daß** als Metallvorläufermaterial ein Metallkomplex oder ein Metallsalz eingesetzt wird, dessen Metall-Zentralatom aus der Gruppe enthaltend Ag, Au, Cu, Zn, Ni, Co, Pd, Pt, Ti, Zr, Cr, Ru, Os Ir, Sn, Pb, Al, Mo, W gewählt wird, und ein(en) oder mehrere Liganden bzw. Gegenion(en) gewählt aus der Gruppe enthaltend H, OH, Halogen, Ammonium, Alkylammonium, Amin, Amid, Carboxylat, Carbonat, Acetylacetonat, Cyanid, Cyanat, Isocyanat, Thiocyanat, Isothiocyanat, Phosphat, Phosphin, Alkoxid, Alkohol, Thiolat, Thiol, Nitrat, Nitrit, Azid, Terafluoroborat, Chlorat, Perchlorat und Carbonyl, aufweist, wie beispielsweise H₂PtCl₆, K₂PtCl₄, Pt(acac)₂, PtCl₂, PtCl₄, (NH₄)₂PdCl₄, (NH₄)₂PdCl₆, Pd(acac)₂, Pd(CₙH₂ₙ₊₁COO)₂ (n=1-20), Pt (CₙH₂ₙ₊₁COO)₂ (n=1-20), Pt(CₙH₂ₙ₊₁COO)₄ (n=1-20), Au (CₙH₂ₙ₊₁COO)₃ (n=1-20), HAuCl₄, (NH₄)AuCl₄, Ag(CH₃(CH₂)ₙCOO) worin n=4-25, AgNO₃, CusO₄, RuCl₃, Ru(acac)₃, SnCl₂, ZnCl₂, Zn(NO₃)₂.

15. Verfahren nach einem der Ansprüche 11 bis 14, **dadurch gekennzeichnet, daß** das Phasentransferreagens aus der Gruppe R-NH₂, wobei R entweder ein aromatischer Kohlenwasserstoff oder ein Alkyl mit 4 bis 20 Kohlenstoffatomen ist, R₄N⁺A⁻, wobei R Wasserstoff, Alkyl mit 1 bis 20 Kohlenstoffatomen oder aromatische Kohlenwasserstoffe bedeutet und A-Halogen, OH oder OAc bedeutet, R-COO⁻Kat⁺, wobei R entweder ein aromatischer Kohlenwasserstoff oder ein Alkyl mit 4 bis 20 Kohlenstoffatomen ist und Kat⁺ H, NH₄, NR₄, K, Na oder Li bedeutet, R-SO₃⁻Kat⁺, wobei R entweder ein aromatischer Kohlenwasserstoff oder ein Alkyl mit 4 bis 20 Kohlenstoffatomen ist und Kat⁺ H, NH₄, NR₄, K, Na oder Li und R₃PO bedeutet, wobei R ein Alkyl mit 4 bis 20 Kohlenstoffatomen ist, gewählt wird.

## Claims

1. A metallic conductive ink for ink-jet printing, comprising a metal precursor material, in particular an organometallic decomposition compound, and a thermally decomposable polymer dissolved in an organic solvent, **characterized in that** a polymer having a decomposition temperature T_{c} < 150°C is contained as the thermally decomposable polymer, the polymer is selected from a cyclic polyacetal having blocked terminal groups, a cyclic polyaldehyde comprising bifunctional monomers, such as polyphthalaldehyde, polyglutaraldehyde, polysuccinaldehyde, or a polymeric glyoxylic acid, or a glyoxylic acid derivative, such as poly(methyl glyoxylate), and monomeric depolymerization products of the thermally decomposable polymer are used as reductants for the metal precursor material.

2. A metallic conductive ink according to claim 1, **characterized in that** the terminal groups are blocked by stable groups such as ethers, esters, amides or urethanes.

3. A metallic conductive ink according to claim 1 or 2, **characterized in that** the metal precursor material is a metal complex, or a metal salt, whose central metal atom is selected from the group consisting of Ag, Au, Cu, Zn, Ni, Co, Pd, Pt, Ti, Zr, Cr, Ru, Os, Ir, Sn, Pb, Al, Mo, W, and comprises one or more ligand(s) or counterion(s) selected from the group consisting of H, OH, halogen, ammonium, alkyl ammonium, amine, amide, carboxylate, carbonate, acetyl acetonate, cyanide, cyanate, isocyanate, thiocyanate, isothiocyanate, phosphate, phosphine, alkoxide, alcohol, thiolate, thiol, nitrate, nitrite, azide, tetrafluoroborate, chlorate, perchlorate and carbonyl, such as, e.g., H₂PtCl₆, K₂PtCl₄, Pt(acac)₂, PtCl₂, PtCl₄, (NH₄)₂PdCl₄, (NH₄)₂PdCl₆, Pd(acac)₂, Pd(CₙH₂ₙ₊₁COO)₂ (n-1-20), HAuCl₄, (NH₄)AuCl₄, Au(CₙH₂ₙ₋₁COO)₂ (n-1-20), Ag(CH₃ (CH₂)ₙCOO) wherein n=4-25, AgNO₃, CuSO₄, RuCl₃, Ru(acac)₃, SnCl₂, ZnCl₂ or Zn(NO₃)₂.

4. A metallically conductive ink according to any one of claims 1, 2 or 3, **characterized in that** a phase transfer reagent is additionally contained, which is selected from the group of R-NH₂, wherein R is either an aromatic hydrocarbon or an alkyl having 4 to 20 carbon atoms, R₄N⁺A⁻, wherein R represents hydrogen, alkyl having 1 to 20 carbon atoms or aromatic hydrocarbons and A⁻ is halogen, OH or OAc, R-COO⁻ Kat⁺, wherein R is either an aromatic hydrocarbon or an alkyl having 4 to 20 carbon atoms und Kat⁺ represents H, NH₄, NR₄, K, Na or Li, R-SO₃⁻Kat⁺, wherein R is either an aromatic hydrocarbon or an alkyl having 4 to 20 carbon atoms and Kat⁺ represents H, NH₄, NR₄, K, Na or Li, and R₃PO, wherein R is an alkyl having 4 to 20 carbon atoms.

5. A metallically conductive ink according to any one of claims 1 to 4, **characterized in that** at least one solvent selected from dimethyl sulfoxide, gamma-butyrolactone 1,2-dimethoxybenzene, tetrahydrofuran, dioxane, cyclopentanone, alkyl acetate, alkyl propionate, alkyl butyrate, toluene, xylene, butanone, anisole or dichloromethane is contained.

6. A metallically conductive ink according to any one of claims 1 to 5, **characterized in that** the ink has a viscosity of 1.5 to 35 mPa.s, in particular, 2.5 to 12 mPa.s.

7. A metallically conductive ink according to any one of claims 1 to 6, **characterized in that** the ink comprises a metal portion larger than 5% by weight, in particular larger than 8% by weight.

8. A metallically conductive ink according to any one of claims 1 to 7, **characterized in that** it contains surface-active substances such as surfactants, block copolymers, wetting agents or emulsifiers.

9. A metallically conductive ink according to any one of claims 1 to 8, **characterized in that** metallic nanoparticles having dimensions of 3 to 200 nm, in particular 5 to 60 nm, are additionally contained.

10. A metallically conductive ink according to any one of claims 1 to 9, **characterized in that** 1 to 20% by weight, in particular 5 to 10% by weight, of the metal portion of the ink is comprised of metallic nanoparticles.

11. A method for producing a metallically conductive ink for ink-jet printing, comprising dissolving a metal precursor material and adding a thermally decomposable polymer dissolved in an organic solvent, **characterized in that** a solution of the metal precursor material, in particular a metal complex, is supplemented with a thermally decomposable polymer dissolved in an organic solvent and having a decomposition temperature T_{c} < 150°C, which polymer is selected from a cyclic polyacetal having blocked terminal groups, a cyclic polyaldehyde comprising bifunctional monomers, such as polyphthalaldehyde, polyglutaraldehyde, polysuccinaldehyde, and a polymeric glyoxylic acid, or a glyoxylic acid derivative, such as poly(methyl glyoxylate), and that the metal precursor material is reduced by monomeric depolymerization products of the thermally decomposable polymer.

12. A method according to claim 11, **characterized in that** an aqueous solution of the metal precursor material is supplemented with a phase transfer reagent dissolved in an organic solvent, is stirred, and a formed organic phase, after having been separated from the aqueous phase, is added to the solution of the decomposable polymer.

13. A method according to claim 11 or 12, **characterized in that** the formed organic phase containing the metal precursor material is evaporated and a residue containing the metal precursor material is taken up in an organic solvent.

14. A method according to claim 11, 12 or 13, **characterized in that** as the metal precursor material a metal complex or a metal salt is used, whose central metal atom is selected from the group consisting of Ag, Au, Cu, Zn, Ni, Co, Pd, Pt, Ti, Zr, Cr, Ru, Os, Ir, Sn, Pb, Al, Mo, W, and comprises one or more ligand(s) or counterion(s) selected from the group consisting of H, OH, halogen, ammonium, alkyl ammonium, amine, amide, carboxylate, carbonate, acetyl acetonate, cyanide, cyanate, isocyanate, thiocyanate, isothiocyanate, phosphate, phosphine, alkoxide, alcohol, thiolate, thiol, nitrate, nitrite, azide, tetrafluoroborate, chlorate, perchlorate and carbonyl, such as, e.g., H₂PtCl₆, K₂PtCl₄, Pt(acac)₂, PtCl₂, PtCl₄, (NH₄)₂PdCl₄, (NH₄)₂PdCl₆, Pd(acac)₂, Pd(CₙH₂ₙ₊₁COO)₂ (n-1-20), HAuCl₄, (NH₄)AuCl₄, Au(CₙH₂ₙ₋₁COO)₂ (n-1-20), Ag(CH₃(CH₂)ₙCOO) wherein n=4-25, AgNO₃, CuSO₄, RuCl₃, Ru(acac)₃, SnCl₂, ZnCl₂ or Zn(NO₃)₂.

15. A method according to any one of claims 11 to 14, **characterized in that** the phase transfer reagent is selected from the group of R-NH₂, wherein R is either an aromatic hydrocarbon or an alkyl having 4 to 20 carbon atoms, R₄N⁺A⁻, wherein R represents hydrogen, alkyl having 1 to 20 carbon atoms or aromatic hydrocarbons and A⁻ is halogen, OH or OAc, R-COO⁻Kat⁺, wherein R is either an aromatic hydrocarbon or an alkyl having 4 to 20 carbon atoms und Kat⁺ represents H, NH₄, NR₄, K, Na or Li, R-SO₃⁻Kat⁺, wherein R is either an aromatic hydrocarbon or an alkyl having 4 to 20 carbon atoms and Kat⁺ represents H, NH₄, NR₄, K, Na or Li, and R₃PO, wherein R is an alkyl having 4 to 20 carbon atoms.

## Revendications

1. Encre métallique conductrice pour des impressions à jet d'encre, comprenant un matériau métallique précurseur, en particulier un composé de décomposition métallo-organique, et un polymère pouvant se décomposer sous l'action de la chaleur, dissous dans un solvant organique, **caractérisée en ce qu'**un polymère présentant une température de décomposition T_{c} < 150 °C est contenu en tant que polymère pouvant se décomposer sous l'action de la chaleur, **en ce que** le polymère est choisi parmi un polyacétal cyclique présentant des groupes terminaux liés, un polyaldéhyde cyclique constitué de monomères bifonctionnels tels que le polyphtalaldéhyde, le polyglutaraldéhyde, le polysuccinaldéhyde, ou un acide glyoxylique polymère ou un dérivé d'acide glyoxylique tel que le poly(méthylglyoxylate), et **en ce que** sont utilisés en tant qu'agents réducteurs pour le matériau précurseur métallique des produits de dépolymérisation monomères du polymère se décomposant sous l'action de la chaleur.

2. Encre métallique conductrice selon la revendication 1, **caractérisée en ce que** les groupes terminaux sont liés par des groupes stables, tels que les éthers, les esters, les amides ou les uréthanes.

3. Encre métallique conductrice selon la revendication 1 ou 2, **caractérisée en ce que** le matériau métallique précurseur utilisé est un complexe métallique ou un sel métallique, dont l'atome métallique central est choisi parmi le groupe comprenant Ag, Au, Cu, Zn, Ni, Co, Pd, Pt, Ti, Zr, Cr, Ru, Os Ir, Sn, Pb, Al, Mo, W, et présente un ou plusieurs ligands ou contre-ions, choisis parmi le groupe comprenant H, OH, l'halogène, l'ammonium, l'alkylammonium, l'amine, l'amide, le carboxylate, le carbonate, l'acétylacétonate, le cyanide, le cyanate, l'isocyanate, le thiocyanate, l'isothiocyanate, le phosphate, la phosphine, l'alkoxyde, l'alcool, le thiolate, le thiole, le nitrate, le nitrite, l'azide, le térafluoroborate, le chlorate, le perchlorate et le carbonyle, comme par exemple H₂PtCl₆, K₂PtCl₄, Pt(acac)₂, PtCl₂, PtCl₄, (NH₄)₂PdCl₄, (NH₄)₂PdCl₆, Pd(acac)₂, Pd(CₙH₂ₙ₊₁COO)₂ (n=1-20), Pt(CₙH₂ₙ₊₁COO)₂ (n=1-20), Pt(CₙH₂ₙ₊₁COO)₄ (n=1-20), Au(CₙH₂ₙ₊₁COO)₃ (n=1-20), HAuCl₄, (NH₄)AuCl₄, Ag(CH₃(CH₂)ₙCOO) (n=4-25), AgNO₃, CuSO₄, RuCl₃, Ru(acac)₃, SnCl₂, ZnCl₂ ou Zn(NO₃)₂.

4. Encre métallique conductrice selon l'une quelconque des revendications 1, 2 ou 3, **caractérisée en ce qu'**est contenu en outre un réactif de transfert de phase choisi parmi le groupe R-NH₂, sachant que R est soit un hydrocarbure aromatique soit un alkyle présentant 4 à 20 atomes de carbone, le groupe R₄N⁺A⁻, sachant que R représente un hydrogène, un alkyle présentant 1 à 20 atomes de carbone ou des hydrocarbures aromatiques et que A⁻ représente un halogène, OH ou OAc, le groupe R-COO⁻Kat*, sachant que R est soit un hydrocarbure aromatique soit un alkyle présentant 4 à 20 atomes de carbone et que Kat⁺ représente H, NH₄, NR₄, K, Na ou Li, le groupe R-SO₃⁻ Kat⁺, sachant que R est soit un hydrocarbure aromatique soit un alkyle présentant 4 à 20 atomes de carbone et que Kat⁺ représente H, NH₄, NR₄, K, Na ou Li, et le groupe R₃PO, sachant que R est un alkyle présentant 4 à 20 atomes de carbone.

5. Encre métallique conductrice selon l'une quelconque des revendications 1 à 4, **caractérisée en ce qu'**est contenu au moins un solvant choisi parmi le diméthylsulfoxyde, le γ-butyrolactone, le 1,2-diméthoxybenzole, le tétrahydrofurane, le dioxane, le cyclopentanone, l'acétate d'aklyle, le propionate d'alkyle, le butyrate d'alkyle, le toluène, le xylène, la butanone, l'anisole ou le dichlorométhane.

6. Encre métallique conductrice selon l'une quelconque des revendications 1 à 5, **caractérisée en ce que** l'encre présente une viscosité allant de 1,5 à 35 mPas, en particulier allant de 2,5 à 12 mPas.

7. Encre métallique conductrice selon l'une quelconque des revendications 1 à 6, **caractérisée en ce que** l'encre présente une fraction de métal supérieure à 5 % en poids, en particulier supérieure à 8 % en poids.

8. Encre métallique conductrice selon l'une quelconque des revendications 1 à 7, **caractérisée en ce qu'**elle contient des substances tensio-actives, telles que les agents tensio-actifs, les polymères séquencés, les agents mouillants ou les émulsifiants.

9. Encre métallique conductrice selon l'une quelconque des revendications 1 à 8, **caractérisée en ce que** sont contenues en outre des nanoparticules métalliques présentant une granulométrie allant de 3 à 200 nm, en particulier allant de 5 à 60 nm.

10. Encre métallique conductrice selon l'une quelconque des revendications 1 à 9, **caractérisée en ce que** 1 à 20 % en poids, en particulier 5 à 10 % en poids de la fraction de métal de l'encre sont formés par des nanoparticules métalliques.

11. Procédé servant à produire une encre métallique conductrice pour des impressions à jet d'encre, comprenant la dissolution d'un matériau métallique précurseur et la décomposition d'un polymère se décomposant sous l'action de la chaleur, dissous dans un solvant organique, **caractérisé en ce qu'**une solution du matériau métallique précurseur, en particulier d'un complexe métallique, est mélangée à un polymère se décomposant sous l'action de la chaleur, dissous dans un solvant organique, lequel polymère présente une température de décomposition T_{c} < 150 °C, et qui est choisi parmi un polyacétal cyclique présentant des groupes terminaux liés, un polyaldéhyde cyclique constitué de monomères bifonctionnels, tels que le polyphtalaldéhyde, le polyglutaraldéhyde, le polysuccinaldéhyde, et un acide glyoxylique polymère ou un dérivé d'acide glyoxylique tel que le poly(méthylglyoxylate), et **en ce que** le matériau métallique précurseur est réduit par des produits de dépolymérisation monomères du polymère se décomposant sous l'action de la chaleur.

12. Procédé selon la revendication 11, **caractérisé en ce qu'**une solution aqueuse du matériau métallique précurseur est mélangée avec un réactif de transfert de phase dissous dans un solvant organique, est agitée et **en ce qu'**une phase organique ainsi obtenue est ajoutée après sa séparation de la phase aqueuse de la solution du polymère se décomposant.

13. Procédé selon la revendication 11 ou 12, **caractérisé en ce que** la phase organique obtenue, contenant le matériau métallique précurseur est évaporée, et **en ce qu'**un résidu contenant le matériau métallique précurseur est absorbé dans un solvant organique.

14. Procédé selon la revendication 11, 12 ou 13, **caractérisé en ce que**, en tant que matériau métallique précurseur, un complexe métallique ou un sel métallique, dont l'atome métallique central est choisi parmi le groupe comprenant Ag, Au, Cu, Zn, Ni, Co, Pd, Pt, Ti, Zr, Cr, Ru, OS Ir, Sn, Pb, Al, Mo, W, est utilisé et présente un ou plusieurs ligands ou contre-ions, choisis parmi le groupe comprenant H, OH, l'halogène, l'ammonium, l'alkylammonium, l'aminé, l'amide, le carboxylate, le carbonate, l'acétylacétonate, le cyanide, le cyanate, l'isocyanate, le thiocyanate, l'isothiocyanate, le phosphate, la phosphine, l'alkoxyde, l'alcool, le thiolate, le thiole, le nitrate, le nitrite, l'azide, le térafluoroborate, le chlorate, le perchlorate et le carbonyle, comme par exemple H₂PtCl₆, K₂PtCl₄, Pt(acac)₂, PtCl₂, PtCl₄, (NH₄)₂PdCl₄, (NH₄)₂PdCl₆, Pd(acac)₂, Pd(CₙH₂ₙ₊₁COO)₂ (n=1-20), Pt(CₙH₂ₙ₊₁COO)₂ (n=1-20), Pt(CₙH₂ₙ₊₁COO)₄ (n=1-20), Au(CₙH₂ₙ₊₁COO)₃ (n=1-20), HAuCl₄, (NH₄)AuCl₄, Ag(CH₃(CH₂)ₙCOO) où n=4-25, AgNO₃, CuSO₄, RuCl₃, Ru(acac)₃, SnCl₂, ZnCl₂ ou Zn(NO₃)₂.

15. Procédé selon l'une quelconque des revendications 11 à 14, **caractérisé en ce que** le réactif de transfert de phase est choisi parmi le groupe R-NH₂, sachant que R est soit un hydrocarbure aromatique soit un alkyle présentant 4 à 20 atomes de carbone, le groupe R₄N⁺A⁻, sachant que R représente un hydrogène, un alkyle présentant 1 à 20 atomes de carbone ou des hydrocarbures aromatiques et que A⁻ représente un halogène, OH ou OAc, le groupe R-COO⁻Kat*, sachant que R est soit un hydrocarbure aromatique soit un alkyle présentant 4 à 20 atomes de carbone et que Kat⁺ représente H, NH₄, NR₄, K, Na ou Li, le groupe R-SO₃⁻Kat⁺, sachant que R est soit un hydrocarbure aromatique soit un alkyle présentant 4 à 20 atomes de carbone et que Kat⁺ représente H, NH₄, NR₄, K, Na ou Li, et le groupe R₃PO, sachant que R est un alkyle présentant 4 à 20 atomes de carbone.
